Europäisches Patentamt

European Patent Office

Office européen des brevets

(11) Publication number: **0 174 304**
**B1**

## (12) EUROPEAN PATENT SPECIFICATION

(45) Date of publication of patent specification: **11.10.89**

(21) Application number: **84901250.5**

(22) Date of filing: **16.02.84**

(86) International application number:
**PCT/US84/00226**

(87) International publication number:
**WO 85/03750 29.08.85 Gazette 85/19**

(51) Int. Cl.⁴: **F 16 F 1/16**

(54) **TORSION SPRING CARTRIDGE ASSEMBLY.**

(43) Date of publication of application:
**19.03.86 Bulletin 86/12**

(45) Publication of the grant of the patent:
**11.10.89 Bulletin 89/41**

(84) Designated Contracting States:
**DE FR GB SE**

(56) References cited:
**DE-A-2 818 226**
**US-A-1 338 556**
**US-A-1 480 663**
**US-A-2 149 374**
**US-A-2 163 131**
**US-A-2 169 373**
**US-A-2 169 850**
**US-A-2 194 964**
**US-A-2 497 072**
**US-A-2 662 236**
**US-A-2 779 602**
**US-A-3 047 283**
**US-A-3 330 558**
**US-A-3 625 545**
**US-A-3 844 583**

(73) Proprietor: **REYNOLDS, Norm**
**10267 West Cascade**
**Franklin, WI 53132 (US)**
(73) Proprietor: **REYNOLDS, Wilbur C.**
**17626 Martin Drive**
**Muskego, WI 53150 (US)**
(73) Proprietor: **WHARTON, Charles E.**
**38 Scranton Place**
**Lake Bluff, IL 60044 (US)**

(72) Inventor: **REYNOLDS, Norm**
**10267 West Cascade**
**Franklin, WI 53132 (US)**
Inventor: **REYNOLDS, Wilbur C.**
**17626 Martin Drive**
**Muskego, WI 53150 (US)**
Inventor: **WHARTON, Charles E.**
**38 Scranton Place**
**Lake Bluff, IL 60044 (US)**

(74) Representative: **Fisher, Bernard et al**
**Raworth, Moss & Cook 36 Sydenham Road**
**Croydon Surrey CR0 2EF (GB)**

Courier Press, Leamington Spa, England.

## Description

Trailers, whether light duty or heavy duty, require a suspension system to support the axle for the wheels. The suspension system is permanently mounted on the frame of the vehicle and generally includes shock absorbers to dampen excessive vibrations. Serviceability of the suspension system, whether for replacement or repair, is a time consuming and sometimes expensive procedure, particularly where parts are to be replaced. In trailers such as mobile homes where three or more axles are required, the cost of the suspension system can be considerable because of the code requirements for road travel even though the trailer may be used only for a single trip, i.e., from the point of manufacture to the point of use. The only recoverable costs are the tires which can be removed from the axles of the home, however, the suspension system including the axles must be left intact.

A torsion spring cartridge assembly for removable attachment to a trailer frame is known from US—A—2,194,964 and includes a series of torsion rods secured at one end to a bracket member fixed to the trailer frame. The rods pass freely through a tubular casing, which is itself mounted via a support block to another bracket which is fitted to another part of the frame. The rods and casing extends into an end bracket member to which wheel arm is joined. The end bracket member can rotate relatively to the tubular casing but the torsion rods are non-rotatably held in the end bracket member. Accordingly, turning of the wheel arm twists the rods, which twisting is resisted by the first-mentioned bracket member.

US—A—2,779,602 discloses a wheel mounting for a trailer having an axial tube in which are located two removable torsion spring assemblies. Each torsion spring assembly comprises an outer, tubular bearing assembly to which a wheel arm is joined, the bearing assembly including a sleeve rotatably mounted about the axial tube, a torsion bar being fitted to the sleeve in non-rotatable manner and extending through the axial tube to a counter-torque hub non-rotatably mounted in the tube remote from the bearing assembly. Accordingly, in this disclosure also, turning of the wheel arm will be resisted by the torsion bar.

In both disclosures, however, various elements of the torsion spring assemblies are constructed such that they have to be generally individually mounted on the trailer frame and some of the elements are disadvantageously exposed to external atmospheric conditions such as rain and dirt.

According to the present invention, there is provided a torsion spring cartridge assembly for supporting a wheel on the end of an open-ended axle tube, said assembly comprising a bearing assembly, a torque assembly connectable to the wheel and mounted for rotary motion in said bearing assembly, a counter-torque hub and two or more torsion bars connecting said torque assembly to said counter-torque hub in order to restrict the rotary motion of the torque assembly, characterised in that said bearing assembly has an outer configuration for fitting said bearing assembly in non-rotatable manner in and relative to the axle tube, said counter-torque hub has an outer configuration for fitting said hub in non-rotatable manner in and relative to the axle tube, a draw bar being connected to said torque assembly and to said counter-torque hub whereby said bearing assembly, torque assembly, counter-torque hub and torsion bars are mountable in the axle tube as a removable unit.

For a better understanding of the invention and to show how the same may be carried into effect, reference will now be made, by way of example, to the accompanying drawings, in which:—

Figure 1 is a perspective view of a simple trailer frame installed in an axle tube.

Figure 2 is a side view of a torsion spring cartridge assembly shown positioned in the axle tube.

Figure 3 is a view taken on line 3—3 of Figure 2 showing a torque hub and bearing assembly.

Figure 4 is a view taken on line 4—4 of Figure 2 showing a counter-torque hub.

Figure 5 is a view taken on line 5—5 of Figure 2 showing a dampening assembly.

Figure 6 is a view of an alternate form of dampening assembly taken on line 6—6 of Figure 7.

Figure 7 is a cross section view of the alternate dampening assembly taken on line 7—7 of Figure 6.

## Description of the Invention

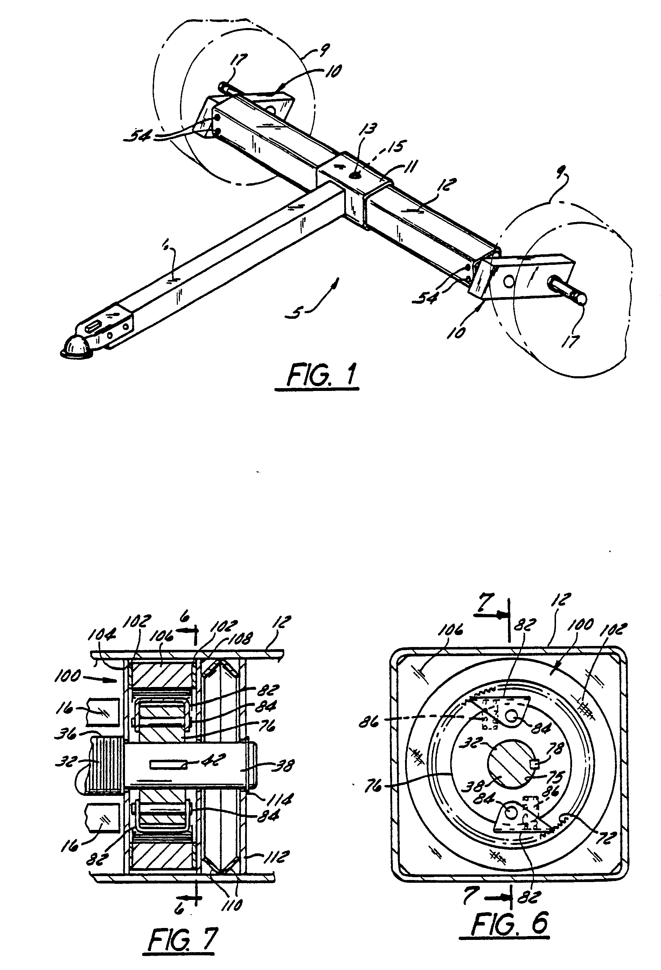

A simple trailer frame 5 of a type contemplated for use of the invention herein is shown in Figure 1 and includes a tubular steel tongue 6, an axle tube 12 mounted on the end of the tongue 6, a torsion spring cartridge assembly 10 mounted on each end of axle tube 12 and a wheel 9 mounted on each of the torsion spring cartridge assemblies 10. The axle tube 12 is removably mounted on the end of the tongue 6 by means of a close fitting tubular member 11 welded to the end of the tongue 6. The tubular member 11 has the same inner dimension as the outer dimension of the axle tube 12. The member 11 and axle tube 12 are shown having a square configuration, however any other configuration can be used. The axle tube 12 is retained in the tubular member 11 by means of a carriage bolt 13 which passes through openings 15 in member 11 and corresponding holes (not shown) in the axle tube 12. The torsion spring cartridge assemblies 10 are retained in the ends of the axle tube 12 by means of bolts 54. Once assembled the wheels 9 can be mounted on the axle 17 provided on each of the cartridge assemblies 10. It should be apparent that each cartridge assembly is independently serviceable for repair or replacement.

The T-frame trailer described above is designed for light loads only such as required for boats, motorcycles, snowmobiles or light industrial applications. Trailers for heavier loads such as stock trailers, equipment trailers and travel trailers, generally include a supporting frame with one or more axle tubes secured to the frame. Each wheel is then independently supported in the axle tube and can be separately serviced, repaired or replaced. This is of particular significance to the mobile home industry where road codes require a permanent axle suspension system for road travel. Using independently removable torsion spring cartridge assemblies in permanently mounted axle tubes will allow removal of the cartridge assemblies from the axle tubes after the mobile home is set up for reuse by the mobile home manufacturer at a reduced cost for the owner and manufacturer.

Torsion Bar Cartridge Assembly

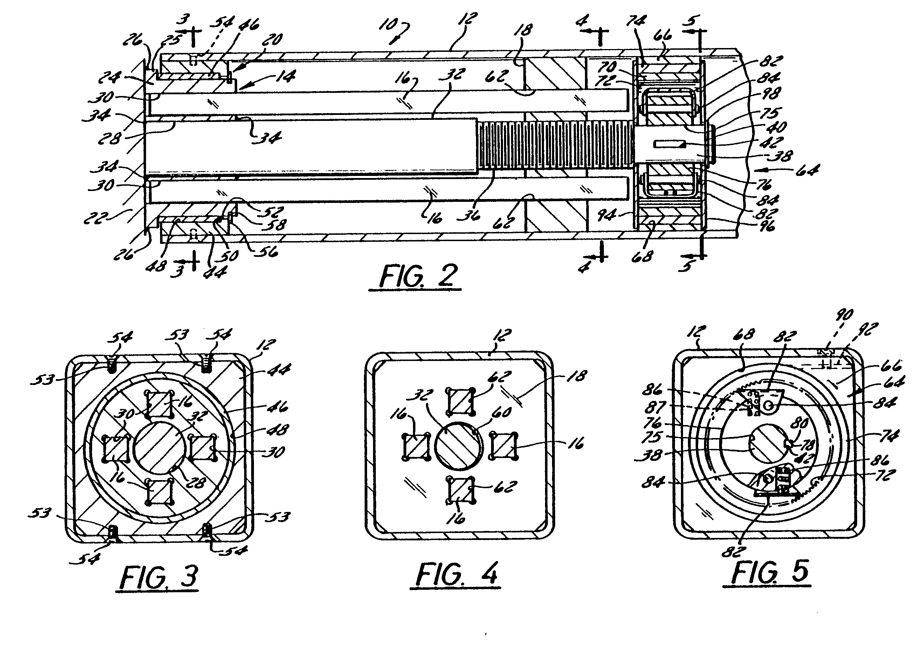

As seen in Figure 2 of the drawings, the torsion bar cartridge assembly 10 is mounted within the square axle tube 12. The assembly 10 generally includes a torque assembly 14, a plurality of torsion bars 16, a counter-torque hub 18 and a bearing assembly 20 for supporting said torque assembly for rotary motion with respect to the axle tube 12. The torsion bars 16 are supported at one end by said torque assembly 14 and are restrained from rotary motion by means of the counter-torque hub 18. It should be noted that these four elements make up the basic torsion spring assembly for one end of the axle tube and are inserted as a single cartridge or unit. With this arrangement serviceability of each cartridge assembly is simplified since each assembly can be separately removed for service, repair and/or replacement as will be more specifically described hereinafter.

The Torque Assembly

The torque assembly 14 includes a torque member 22 connected to a torque hub 24 by any convenient means such as welds 26. The hub 24 includes a circular bore 28 and a number of square openings 30 spaced radially outward from the axis of the bore 28 at equal intervals. A radial flange 25 is provided at the outer end of the hub 24 and an annular groove 58 is provided at the inner end. A draw bar 32 is secured to the torque hub 24 by means of welds 34 and extends axially through the bore 28 into the tube 12. The draw bar 32 includes a threaded reduced diameter section 36 and a reduced diameter end section 38 having an axially extending groove 42 on the outer circumference. An annular groove 40 is provided at the end of the end section 38. The torque member 22 is representative of one of a number of members that can be used to connect the torque hub to an oscillating member.

The torque assembly 14 is supported in the end of the axle tube 12 by means of the bearing assembly 20. In this regard, the bearing assembly includes a housing 44 and a bearing 46. The housing has an outer configuration conforming to the configuration of the axial tube, in this case square, with a counter bore 48 which terminates at a shoulder 50 formed by means of an inner radial flange 52. A number of threaded holes 53 can be provided in the outer periphery of the housing 44. The bearing 46 is positioned in the bore 48 and abuts the shoulder 50. The housing 44 is retained in the axle tube 12 by means of a number of screws 54 screwed in holes 53. The torque hub 24 is supported in the housing 44 by the bearing 46 and is retained therein by a snap ring 56 positioned in the groove 58 in the hub 24.

The counter-torque hub 18 has an outer configuration also conforming to the inner configuration of the axle tube 12 and is provided with a center bore 60 and a number of square openings 62. The center bore 60 is threaded to operatively engage the threaded section 36 of the draw bar 32. The hub 18 is mounted on the draw bar by turning the hub on the threaded section 36 to a predetermined spaced position with respect to the torque hub 24.

The torsion bars 16 are then inserted through the openings 62 in the counter-torque hub 18 into the openings 30 in the torque hub 24. The bars 16 are held in position in the openings 30 and 62 by means of a plate 94 as described hereinafter. Rotary motion of the torque member 22 will then be resisted by the counter-torque hub 18. It should be noted that the bias force of the bars 16 can be varied by adjusting the distance of the counter-torque hub 18 with respect to the hub 24. The torsion rods can be made of any resilient material from steel to fiberglass depending on the requirement of the particular application.

Adjustment is accomplished by removing the plate 94 and pulling the torsion bars 16 out of the openings 30 in the torque hub 24. The counter-torque hub 18 is rotated in one direction to move closer to the hub 24 and in the other direction to move the hub 18 farther away from the torque hub 24. Movement of the hub 18 closer to the hub 24 will increase the force required to rotate the torque arm and movement away will decrease the force. The torsion bars 16 are then reset in the openings 30, and the plate 94 mounted on the draw bar 32 in abutting engagement with the end of section 38.

Dampening Assembly

Means can be provided on the end of the draw bar 32 to damp the return motion of the torque member 22. Such means is in the form of a dampening assembly 64. In this regard and referring to Figures 2 and 5, the dampening assembly 64 includes a housing 66 having an outer configuration conforming to the configuration of the axle tube and a center bore 68. A spline ring 70 having a series of teeth 72 around the inner diameter is supported in the bore 68 by means of an annular friction ring or pad 74. The friction 74 can be formed of a number of friction materials such as clutch brake band material (Raybestos-Manhattan material F451). A rotor 76 having a center bore 75 is mounted on the end section 38 of the draw bar inside of the spline ring 70. The rotor is secured to the draw bar by means of a

key 78 positioned in the groove 42 in the end section 38 and a groove 80 provided in the bore 75 of the rotor 76.

The rotary movements of the rotor 76 are transferred to the spline ring 70 by means of a pair of pawls 82 mounted on diametrically opposite sides of the rotor 76. Each of the pawls is supported on the rotor by means of a pivot pin 84 and is biased radially outwardly by means of compression springs 86 positioned in blind bores 87 provided in the rotor 76. The pawls are positioned to engage the teeth 72 in the spline ring.

Referring to Figure 5, it will be noted that the rotor 76 is free to rotate in a clockwise direction. Counterclockwise rotation of the rotor 76 is resisted by means of the engagement of the pawls 82 with the teeth 72 on the spline ring 70. On engagement of the pawls with the teeth 72, the spline ring will be forced to move in the counterclockwise direction. Rotary motion of the spline ring is resisted by means of the friction ring 74 provided between the spline ring and the bore 68 in the housing 66. In this regard, it should be noted that the spline ring includes 72 teeth spaced at 5 degree intervals. Any movement of less than 5 degrees will not be affected by the dampening assembly. As the amount of rotary motion increases in five degree increments a greater amount of dampening force will be introduced into the torque draw bar.

Means are provided for adjusting the frictional force of the friction ring 74. Such means is in the form of a screw 90 and a slot 92 provided in the housing 66. As the slot 92 is closed, the bore 68 will tighten on the ring 74 increasing the pressure on the spline ring 70.

The dampening assembly 64 is mounted on the end 38 of the draw bar 32 in abutting engagement with the plate 94. The housing 66 is positioned against plate 94 and a second plate 96 is positioned on the end of the section 38 and retained thereon by a snap spring 98 positioned in groove 40. The spline ring 70 has a width slightly smaller than the width of housing 66 to allow for free movement between plates 94 and 96.

An alternate dampening assembly 100 is shown in Figures 6 and 7 wherein the return motion of the torque member 22 is dampened by means of radial friction pads 102. The dampening assembly 100 is mounted on the end section 38 of the draw bar 32 with a first square stator plate 104 abutting the end of the threaded section 36. A rotor 76, as described above, is mounted on the end section 38 with the pawls 82 biased outward by springs 86. A spline ring 106 having 72 teeth is placed on the rotor 76 with one of the friction pads 102 positioned between plate 104 and the spline ring 106. A second stator plate 108 is positioned in the axle tube with the other friction pad 102 located between plate 108 and ring 106.

The friction pads 102 are loaded by means of a pair of Belleville spring washers 110 positioned on the end of shaft section 38 and retained thereon by a washer 112 and a snap ring 114 positioned in groove 40. The amount of friction force can be adjusted by adding washers 112 to the end of the shaft section 38. The dampener 40 operates in the same way as dampener 64 except that the friction force is applied axially rather than radially.

The transfer of motion from the rotor 76 to the spline rings 70 or 106 by the pawls 82 is only representative of one of a number of systems for accomplishing this result. An overrunning clutch or any other one-way transfer mechanism could be used for this purpose. The overrunning clutch would allow free wheeling on wind up of the torsion spring and would lock the friction dampener to the rotor on reverse motion.

Resume

The torsion spring cartridge assembly disclosed herein is adaptable for use in practically any environment where oscillating motion is encountered. The assembly provides axle support for a rotating member as well as spring suspension for the axle. Dampeners can be provided to damp motion in one direction of oscillation or rotation. Serviceability is simplified since the entire assembly is removable for repair or replacement. The spring rate can be quickly and easily adjusted to accommodate environmental changes such as load, road conditions and weather.

**Claims**

1. A torsion spring cartridge assembly (10) for supporting a wheel (9) on the end of an open-ended axle tube (12), said assembly comprising a bearing assembly (20), a torque assembly (14) connectable to the wheel (9) and mounted for rotary motion in said bearing assembly (20), a counter-torque hub (18) and two or more torsion bars (16) connecting said torque assembly (14) to said counter-torque hub (18) in order to restrict the rotary motion of the torque assembly, characterised in that said bearing assembly (20) has an outer configuration for fitting said bearing assembly in non-rotatable manner in and relative to the axle tube (12), said counter-torque hub (18) has an outer configuration for fitting said hub in non-rotatable manner in and relative to the axle tube (12), a draw bar (32) being connected to said torque assembly (14) and to said counter-torque hub (18) whereby said bearing assembly (20), torque assembly (14), counter-torque hub (18) and torsion bars (16) are mountable in the axle tube (14) as a removable unit.

2. An assembly according to claim 1, characterised in that said counter-torque hub (18) includes a threaded bore (60) and said draw bar (32) includes a threaded section (36) threadedly engaged in said bore (60) for varying the distance between the counter-torque hub (18) and the torque assembly (40) to vary the spring rate of the torsion bars (16).

3. An assembly according to claim 1 or 2, characterised in that means (64) are connected to a threaded end of said draw bar (32) for damping the motion of the torque assembly (14).

4. A cartridge assembly according to claim 3, characterised in that said damping means comprises a housing (66) for fitting in non-rotatable manner in said axle tube, a bore (68) in said housing, a friction ring (74) positioned in said bore (68), a slip ring (70) positioned in said friction ring, a rotor (76) connected to said draw bar (32) and positioned in said slip ring, and means (72, 82) operatively connecting said rotor (76) to said slip ring in one direction of motion, whereby the rotary motion of said torque assembly (14) in said one direction is dampened by the frictional resistance of the friction ring (74) to movement of said slip ring (70).

5. An assembly according to claim 3, characterised in that said damping means comprises a rotor (76) operatively connected to said draw bar (32), a slip ring (70) mounted on said rotor, means (72, 82) for operatively connecting said rotor to said slip ring in one direction of motion, and means for frictionally engaging said slip ring to dampen the motion of said rotor in said one direction of motion.

6. An assembly according to claim 3, 4 or 5, characterised in that said damping means includes means (90, 92) for adjusting the frictional resistance of the friction ring to movement of said slip ring.

7. An assembly according to any one of the preceding claims, when mounted in a said axle tube (12), characterised in that said axle tube has a square configuration, which corresponds to the outer configurations of said bearing assembly and counter-torque hub.

## Patentansprüche

1. Gekapselte Torsionsfederbaugruppe (10) zum Aufhängen eines Rades (9) am Ende eines stirnseitig offenen Achsrohres (12), mit einer Lager-Baugruppe (20), einer mit dem Rad (9) verbindbaren und in der Lager-Baugruppe (20) drehbar angeordneten Drehmoment-Baugruppe (14), einer Gegenmoment-Nabe (18), und zwei oder mehr Drehstäben (16), welche die Drehmoment-Baugruppe (14) mit der Gegenmoment-Nabe (18) verbinden, um die Drehbewegung der Drehmoment-Baugruppe zu begrenzen, dadurch gekennzeichnet, daß die Lager-Baugruppe (20) eine äußere Gestaltung aufweist, durch die sie nicht drehbar in und relativ zum Achsrohr (12) angeordnet ist, die Gegenmoment-Nabe (18) eine äußere Gestaltung aufweist, durch die sie nicht drehbar in und relativ zum Achsrohr (12) angeordnet ist, und daß eine Zugstange (32) mit der Drehmoment-Baugruppe (14) und der Gegenmoment-Nabe (18) verbunden ist, wodurch die Lager-Baugruppe (20), die Drehmoment-Baugruppe (14), die Gegenmoment-Nabe (18) und die Drehstäbe (16) in das Achsrohr (14) als wegnehmbare Einheit einbaubar sind.

2. Baugruppe nach Anspruch 1, dadurch gekennzeichnet, daß die Gegenmoment-Nabe (18) eine Gewindebohrung (60) aufweist und die Zugstange (32) einen mit Gewinde versehenen Abschnitt (36) hat, der zum Verändern des Abstandes zwischen der Gegenmoment-Nabe (18) und der Drehmoment-Baugruppe (14) in die Bohrung (60) eingeschraubt ist, so daß die Federsteife der Drehstäbe (16) einstellbar ist.

3. Baugruppe nach Anspruch 1 oder 2, dadurch gekennzeichnet, daß mit einem mit Gewinde versehenen Ende der Zugstange (32) eine Vorrichtung (64) zum Dämpfen der Bewegung der Drehmoment-Baugruppe (14) verbunden ist.

4. Gekapselte Baugruppe nach Anspruch 3, dadurch gekennzeichnet, daß die Dämpfungsvorrichtung ein in das Achsrohr nicht drehbar einbaubares Gehäuse (66) umfaßt, eine Bohrung (68) im genannten Gehäuse, einen in der Bohrung (68) angeordneten Reibring (74), einen im Reibring angeordneten Schleifring (70), einen mit der Zugstange (32) verbundenen und im Schleifring angeordneten Rotor (76), und Mittel (72, 82), welche den Rotor (76) mit dem Schleifring betriebsmäßig in einer Bewegungsrichtung verbinden, derart, daß die Drehbewegung der Drehmoment-Baugruppe (14) in der genannten einen Richtung durch den Reibwiderstand, den der Reibring (74) einer Bewegung des Schleifrings (70) entgegensetzt, gedämpft wird.

5. Baugruppe nach Anspruch 3, dadurch gekennzeichnet, daß die Dämpfungsvorrichtung einen mit der Zugstange (32) betriebsmäßig verbundenen Rotor (76) umfaßt, einen auf dem Rotor angeordneten Schleifring (70), Mittel (72, 82) zum betriebsmäßigen Verbinden des Rotors mit dem Schleifring in einer Bewegungsrichtung, und Mittel zum Verbringen des Schleifrings in Reibeingriff, derart, daß die Bewegung des Rotors in der genannten einen Bewegungsrichtung dämpfbar ist.

6. Baugruppe nach Anspruch 3, 4 oder 5, dadurch gekennzeichnet, daß die Dämpfungsvorrichtung Mittel (90, 92) zum Einstellen des Reibwiderstandes, den der Reibring einer Bewegung des Schleifrings entgegensetzt, aufweist.

7. Baugruppe nach einem der vorhergehenden Ansprüche bei Anordnung im Achsrohr (12), dadurch gekennzeichnet, daß das Achsrohr von quadratischer Konfiguration ist, die den Außenkonturformen der Lager-Baugruppe und der Gegenmoment-Nabe entspricht.

## Revendications

1. Ensemble (10) formant cartouche à ressort de torsion, destiné à supporter une roue (9) à l'extrémité d'un tube d'essieu (12) à extrémités ouvertes, ledit ensemble comprenant un ensemble formant palier (20), un ensemble (14) de transmission d'un couple, pouvant être raccordé à la roue (9) et monté de manière à tourner dans ledit ensemble formant palier (20), un moyeu (18) appliquant un couple antagoniste, et deux ou un plus grand nombre de barres de torsion (16) raccordant ledit ensemble (14) de transmission de couple audit moyeu (18) de transmission d'un couple antagoniste afin de limiter le mouvement de rotation de l'ensemble de transmission de couple, caractérisé en ce que ledit ensemble formant palier (20) présente une configuration extérieure permettant le montage dudit ensemble formant palier dans le tube d'essieu (12), de manière qu'il ne puisse pas tourner par rapport à ce tube, une barre d'accouplement (32) étant raccordée audit ensemble (14) de transmission de couple et audit moyeu (18) de transmission de couple antagoniste, de telle façon que ledit ensemble formant palier (20), ledit ensemble (14) d'application de couple, ledit moyeu (18) de transmission de couple antagoniste et lesdites barres de torsion (16) puissent être montés dans le tube d'essieu (12) sous la forme d'une unité amovible.

2. Ensemble selon la revendication 1, caractérisé en ce que ledit moyeu (18) de transmission d'un couple antagoniste comprend une trou taraudé (60), et en ce que ladite barre d'accouplement (32) comporte une section filetée (36) s'engageant par vissage dans ledit trou (60) de manière à modifier la distance entre le moyeu (18) de transmission de couple antagoniste et l'ensemble (40) de transmission de couple, et de manière à modifier la flexibilité des barres de torsion (16).

3. Ensemble selon la revendication 1 ou 2, caractérisé en ce que des moyens (64) sont raccordés à une extrémité filetée de ladite barre d'accouplement (32) pour amortir le déplacement de l'ensemble (14) de transmission de couple.

4. Ensemble formant cartouche selon la revendication 3, caractérisé en ce que lesdits moyens amortisseurs comprennent un boîtier (66) destiné à être monté, sans possibilité de rotation, dans ledit tube d'essieu, un trou (68) ménagé dans ledit boîtier, une bague de friction (74) disposée dans ledit trou (68), et une bague coulissante (70) positionnée dans ladite bague de friction, un rotor (76) raccordé à ladite barre d'accouplement (32) et positionné dans ladite bague coulissante, et des moyens (72, 82) raccordant, de façon opérationnelle, ledit rotor (76) à ladite bague coulissante dans un sens de déplacement, ce qui a pour effet que le mouvement de rotation dudit ensemble (14) de transmission de couple dans ce sens est amorti par la résistance de frottement opposée par la bague de friction (74) au déplacement de ladite bague coulissante (70).

5. Ensemble selon la revendication 3, caractérisé en ce que lesdits moyens d'amortissement comprennent un rotor (76) raccordé, de façon opérationnelle, à ladite barre d'accouplement (32), une bague coulissante (70) montée sur ledit rotor, des moyens (72, 82) destinés à raccorder, de façon opérationnelle, ledit rotor à ladite bague coulissante dans un sens de déplacement, et des moyens destinés à s'appliquer, par frottement, contre ladite bague coulissante de manière à amortir le déplacement dudit rotor dans ledit sens de déplacement.

6. Ensemble selon la revendication 3, 4 ou 5, caractérisé en ce que lesdits moyens d'amortissement incluent des moyens (90, 92) permettant de régler la résistance de frottement opposée par la bague de friction au déplacement de ladite bague coulissante.

7. Ensemble selon l'une quelconque des revendications précédentes, installé dans ledit tube d'essieu (12), caractérisé en ce que ledit tube d'essieu présente une forme carrée, qui correspond aux formes extérieures dudit ensemble formant palier et dudit moyeu d'application du couple antagoniste.

_FIG. 1_

_FIG. 7_

_FIG. 6_

FIG. 2

FIG. 3

FIG. 4

FIG. 5

EP 0 174 304 B1